# EUROPEAN PATENT SPECIFICATION

(11) **EP 2 149 468 B1**
(45) Date of publication and mention of the grant of the patent: **06.05.2015**
(21) Application number: 09166290.8
(22) Date of filing: 24.07.2009
(51) Int. Cl.: B60J 10/04

(54) **Vehicle glass seal**
Fahrzeugglasdichtung
Joint de vitre de véhicule

(30) Priority: 30.07.2008 GB 0813897
(43) Date of publication of application: 03.02.2010
(73) Proprietor: Nissan Motor Manufacturing (UK) Ltd., Cranfield Bedfordshire MK43 0DB (GB)
(72) Inventor: Kilby, Mike, Cranfield, Bedfordshire MK43 0DB (GB)
(74) Representative: Holmes, Matthew William

(56) References cited:
- EP-A1- 0 256 219
- EP-A2- 1 201 476
- US-A- 5 247 764
- US-A1- 2001 054 259

## Description

This invention relates to seals for vehicle windows, and in particular, but not exclusively, to a seal for a motor vehicle with a slidably moveable side window adjacent to the occupant compartment or cabin of the vehicle.

The side doors of vehicles, especially passenger vehicles, usually include a window, often referred to as a window-glass or drop-glass that can be lowered and raised by the vehicle occupants. This opening and closing is achieved either by the manual turning of a handle or by the operation of a switch which controls a window regulator to raise and lower the glass.

A typical vehicle door has a window-frame which provides the structure of the door and supports the drop-glass. The drop-glass is carried in the window-frame by a glass-run seal which prevents the passage of air and water into the vehicle between the glass and the frame. In addition to sealing the interior of the vehicle from the outside environment, the seal also acts as a glass-run channel to permit the glass to move easily between its open and closed positions.

The area of window glass visible when the window is in the closed position is typically defined by four sides: a lower glass-line above the main body of the door (often referred to as the waistrail), two glass-run channels, typically at the substantially vertical sides of the window, and an upper glass-line which is adjacent to the top of the door.

During the opening and closing of the slidably movable window-glass, the edge of the glass that is received by the window-frame, when the window is fully closed, is referred to as the leading edge. The edge of the window-glass distal from the leading edge is known as the trailing edge. Typically, the trailing edge of the window-glass is supported by the window regulator.

Historically, glass-run seals were provided with two sealing surfaces so as to provide a suitably impermeable seal which also permits the drop-glass to slide in the glass-run. To facilitate the moving of the glass within the seal, there is a small amount of clearance between the edge of the glass, formed around the perimeter of the first and second sealing surfaces, and the seal. The first and second sealing surfaces support the drop-glass in a direction parallel to the sliding movement of the glass.

However, it was found that due to the small amount of clearance between the glass and the seal, instances could arise where the drop-glass was insufficiently supported by the two sealing surfaces. This had the effect that the drop-glass was prone to slight rotation within the seal with respect to the window frame. The misalignment of the glass caused by this rotation tends to cause juddering as the glass moves within the seal between its open and closed positions. This judder was found to lead to impaired window regulator performance and advanced deterioration of the seal.

The introduction of a third sealing surface which further guided the drop-glass parallel to the direction of glass movement was proposed to manage the clearance between the glass and the seal and prevent the problem of glass judder. This third surface is commonly referred to as a judder-lip as it controls the movement, in particular juddering, of the drop-glass.

Such a judder-lip is known from EP 1,201,476A2, which discloses a "shock absorption member" 15 in a glass run channel.

Whilst the introduction of the judder-lip increased seal performance and decreased the likelihood of the glass juddering and becoming jammed in its run, it presented further problems as set out below.

During manufacture, the glass-run seal is typically treated with a coating low-friction material to promote easy movement of the drop-glass in the glass-run. However, only one side of the judder-lip is coated due to the restricted access for the coating process during the manufacture of the seal. Thus, the underside of the judder-lip remains untreated and therefore displays relatively high friction compared to the upper surface.

However, the present applicant has recognised a problem presented by the judder-lip in that during assembly of the vehicle door, or even during use, it can become misaligned thereby exposing the glass to the untreated, relatively high friction, underside of the judder-lip. This causes uneven friction between the glass and the glass-run seal which can lead to the glass juddering, slowing or becoming stuck with use.

Furthermore, once the judder-lip has become misaligned it is highly likely to remain misaligned, thereby exacerbating the problem.

It is an object of the present invention to at least mitigate some of the above problems.

According to one aspect of the present invention there is provided a glass-run seal for sealing a slidably openable vehicle window, the window comprising: a slidably movable window-glass and the glass-run seal including a judder-lip for sealing against an outer edge of the window-glass, the judder-lip being movable between an aligned position towards which the judder-lip is resiliently biased and in which, in use, the judder-lip contacts at least part of the outer edge of the window-glass, and a misaligned position in which, in use, the judder-lip contacts with a planar surface of the window-glass, wherein the judder-lip has at least a first discontinuity therein to allow movement of the judder-lip from its misaligned position to its aligned position upon the opening or closing of the window.

In an embodiment, the discontinuity allows an upper section of the judder-lip arranged above the discontinuity to move between its aligned and misaligned positions independently of a lower section of the judder-lip arranged below the discontinuity.

Advantageously, the discontinuity divides the judder-lip, but not the seal, into independent upper and lower sections. The upper section of the judder-lip is therefore moveable between its aligned and misaligned position in isolation from the lower section and vice versa. The misalignment of one section of the judder-lip does not therefore lead necessarily to the permanent misalignment of the entire length of the judder-lip as is the case in the prior art seals.

This feature is especially advantageous for the following reasons. As the top of the slidably movable window-glass passes the discontinuity upon the opening of the window, the upper section of the glass-run seal is no longer in contact with the window-glass and, due to the presence of the discontinuity, is no longer affected by the position (whether that be aligned or misaligned) of the lower section. This allows the upper section of the judder-lip to either remain in, or return to, its aligned position thereby mitigating the problem associated with the prior art described above.

In an embodiment, the glass-run seal further comprises a first wall seal configured to seal, in use, against a first planar surface of the window-glass and/or a second wall seal configured to seal, in use, against a second opposing planar surface of the window-glass.

In an embodiment, the discontinuity is arranged below a waistrail of the vehicle.

Advantageously, positioning the discontinuity below the waistrail of the vehicle prevents the discontinuity being directly exposed to wind or water which may give rise to issues of unwanted wind-noise or water ingress into the vehicle.

In an embodiment, the discontinuity comprises a V-shaped cut in the judder-lip.

In an embodiment, the seal comprises an extrusion.

In one arrangement the judder-lip includes a second discontinuity, the second discontinuity being located above the first discontinuity.

In an embodiment, the second discontinuity is arranged below the waistrail of the vehicle.

In an embodiment, the judder-lip defines a middle portion which is located between the first discontinuity and the second discontinuity and which always remains in contact with the drop-glass as the glass moves between its closed and fully open positions.

According to another aspect of the present invention there is provided a door for a vehicle, the door comprising a window-frame defining an aperture for receiving the glass-run seal of the previous aspect of the invention, the glass-run seal carrying a slidably openable window-glass, wherein the window-glass is arranged for sliding motion in the glass-run seal between a closed position and a lower limit position in which the aperture is at least partially open.

In an embodiment, the window-glass defines a leading-edge, a trailing-edge and side edges extending therebetween.

In an embodiment, with the window-glass in its closed position, the trailing-edge is above the discontinuity, and with the window-glass in its lower limit position the leading-edge is below the discontinuity.

In an embodiment, when moving between its lower limit position and its closed position the entirety of the window-glass side edge within the glass-run seal passes the discontinuity.

Advantageously, this allows either the lower or upper sections of the judder-lip, whichsoever is not in contact with the vehicle window-glass, to assume its aligned position into which it is resiliently biased.

Alternatively, or in addition, where a second discontinuity is also provided, the trailing-edge of the window-glass is arranged above the first discontinuity with the window-glass in its closed position, and the leading-edge of the window-glass is arranged below the second discontinuity with the window-glass in its lower limit position.

In an embodiment, when the window-glass is in its lower limit position the upper section of the judder-lip is not in contact with the window-glass, enabling the upper section of judder-lip to assume its aligned position towards which it is resiliently biased. When the window-glass is in its closed position the lower section of the judder-lip is not in contact with said glass, enabling the lower section to assume its aligned position towards which it is resiliently biased.

According to a further aspect of the present invention there is provided a vehicle comprising a glass-run seal according to the previous relevant aspect of the invention and/or a door according to the previous relevant aspect of the invention.

According to a yet further aspect of the present invention there is provided a method of manufacturing a glass-run seal, the method comprising:
a) extruding an elongate glass-run seal comprising a judder-lip for engaging an outer edge of the glass-run;
b) inserting sections of said extruded section into a mould;
c) moulding corners to join said extruded sections to form a continuous seal; and
d) forming said at least one discontinuity in said -judder-lip.

In an embodiment, the steps described for the method of manufacturing a glass-run seal are performed in the order: a) then d) then b) followed by c), wherein the forming the at least one discontinuity is performed prior to inserting the extruded sections into the mould.

In an embodiment, the steps described for the method of manufacturing a glass-run seal are performed in the order: a) then b) then d) followed by c), wherein the forming the at least one discontinuity is performed prior to removing the glass-run seal from said mould.

In an embodiment, the steps described for the method of manufacturing a glass-run seal are performed in the order: a) then b) then c) followed by d), wherein the forming the at least one discontinuity is performed after the removal of the glass-run seal from the mould.

The invention will now be described, by way of example only, and with reference to the following drawings in which:
Figure 1 is a side view of a vehicle side door including the seal of the present invention with the window-glass or drop-glass in its closed position;
Figure 2 is a side view of the vehicle door of Figure 1 with the window-glass or drop-glass in an open position;
Figure 3 is a perspective sectioned view of the seal of Figure 1 taken along line III-III in Figure 1;
Figure 4 is a perspective sectioned view of the seal of Figure 2 taken along line IV-IV in Figure 2;
Figure 5 is a detailed perspective sectioned view of the notch of the seal of Figure 1;
Figure 6 is a cross-sectional view of the seal of Figure 5 taken along line VI-VI in Figure 5;
Figure 7 is a cross-sectional view of the seal of Figure 5 taken along line VII-VII in Figure 5;
Figure 8 is a cross-sectional plan view of the seal of Figure 1 taken along line III-III in Figure 1 showing the judder-lip in its aligned position; and
Figure 9 is a cross-sectional plan view of the seal of Figure 1 taken along line III-III in Figure 1 showing the judder-lip in its misaligned position.

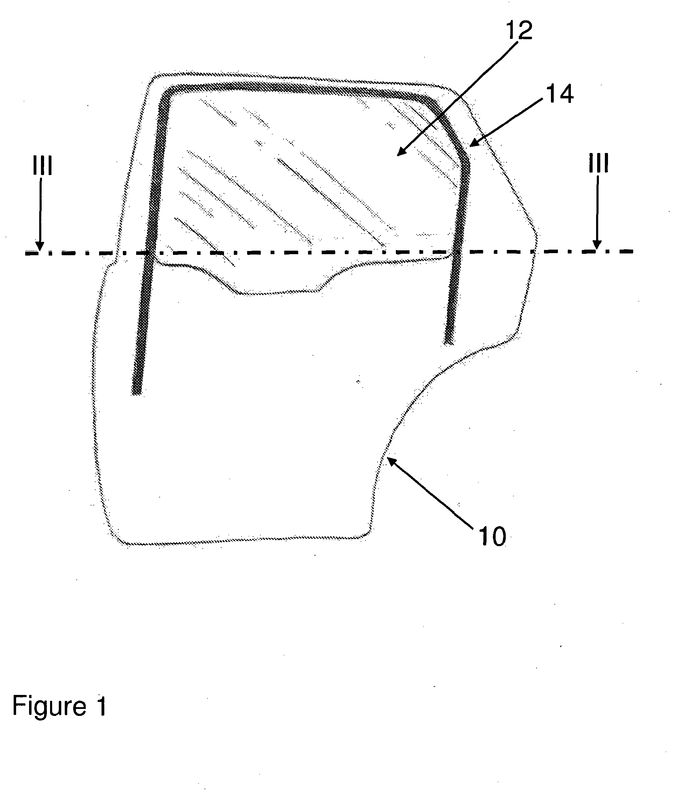

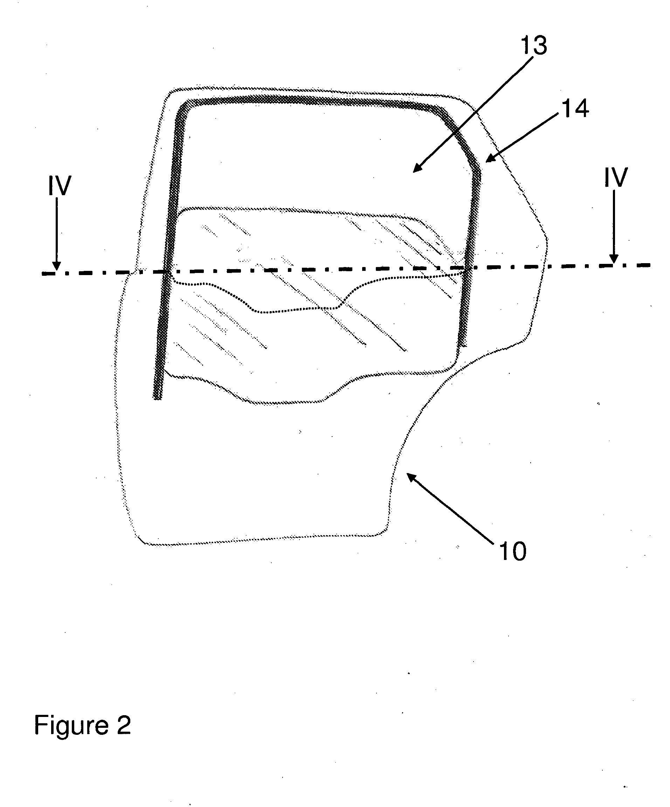

Turning initially to Figures 1 and 2, a vehicle side door 10 is shown having a window-frame 11 which defines a window aperture 13. Arranged in the aperture 13 is a sheet of glass, in the form of a movable slidable window-glass or drop-glass 12. The drop-glass 12 is mounted in the window-frame 11 by way of a glass-run seal 14. The drop-glass 12 slides in the glass-run seal 14 between a closed position depicted in Figure 1 and an open position depicted in Figure 2 under the operation of a window regulator, not shown for clarity.

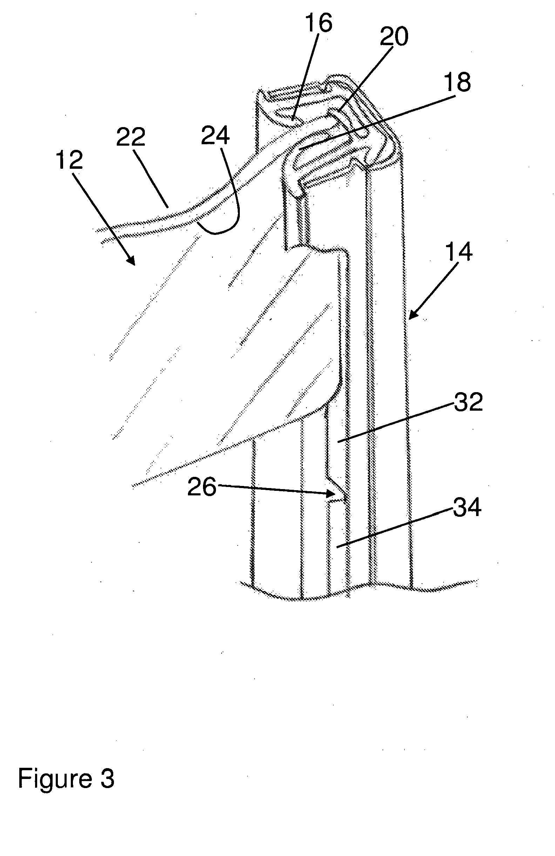

Referring now to Figure 3, the glass-run seal 14 is shown fitted into the window-frame channel 17 with a side edge 15 of the drop-glass 12 positioned within the seal 14. Turning to the formation of the glass-run seal 14 in further detail, Figure 3 shows that the seal 14 has three sealing surfaces defined respectively by three projections in the form of a first arm 16, a second arm 18 and a judder-lip 20. The first and second arms 16, 18 seal against opposing planar surfaces 22, 24 of the glass 12 at a position near the edge of the drop-glass 12. The judder-lip 20 seals against the side edge 15 of the drop-glass 12. The three projections 16, 18, 20 form a sealing channel 19 in which the side edge 15 of the drop-glass 12 runs.

The purpose of each of these projections 16, 18, 20 will now be described in further detail. The first and second arms 16, 18 prevent the ingress of water or dirt into the vehicle around the outer edge of the drop-glass 12. The judder-lip 20 provides a dual function. Firstly, it serves to improve the sealing function of the seal 14 and secondly maintains the alignment of the drop-glass 12 parallel to the direction of movement of the drop-glass 12 in the glass-run.

The glass-run seal 14 can be made of any appropriate resilient material but is typically formed from an extrudable rubber-based material. In order to allow the drop-glass 12 to move more easily in the glass-run seal 14, the surfaces of the seal 14 that come into contact with the glass 12 are treated with a low friction treatment which may be added during or after production of the seal 14. The low friction coating is typically applied by means of a spray coating, or may be applied to the seal in a known manner. This treatment reduces friction between the seal 14 and the drop-glass 12 and therefore facilitates the movement of the glass 12 within the seal 14.

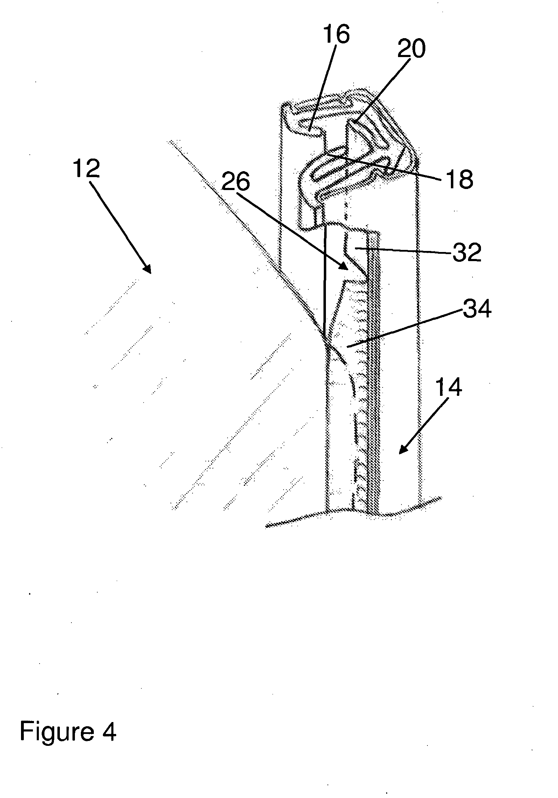

A discontinuity in the form of a notch 26 is provided in the judder-lip 20. The notch 26 is located at a position which is below the lower limit of travel of a lower edge 21 of the drop-glass 12 when the drop-glass 12 is in its closed position, as shown in Figure 3. Turning now to Figure 4 which shows the drop-glass 12 in an open position, it will be appreciated that the notch 26 is located at a position which is above the lower limit of travel of the upper edge 23 of the drop-glass 12 when the glass 12 is in its lowest position, also known as the fully open position. It will be appreciated that whilst the notch is shown as a V-groove, it could have an alternative shape without departure from the scope of the invention. The purpose of the notch 26 will be described in further detail shortly.

Reference to Figures 3 and 4 indicates that the notch 26 divides the judder-lip 20 into an upper section 32 above the notch 26 and a lower section 34 below the notch 26. The notch is located below the waistrail of the vehicle which defines the lower exposed edge of the drop-glass 12.

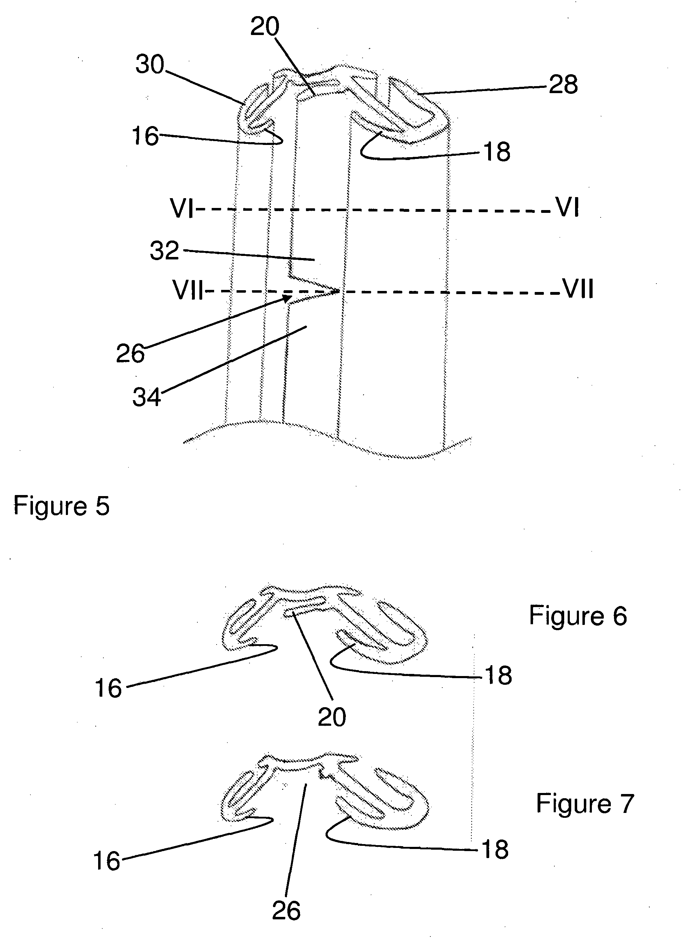

Referring now to Figure 5 in which the glass-run seal 14 is shown in a typical preassembled or extended condition in which the seal has been opened out in order to assist the reader. In addition to the first and second arms 16, 18 and judder-lip 20, first and second cosmetic lips 28, 30 (not shown in earlier Figures for clarity) are optionally provided which, following assembly of the seal into the door, provide a shroud feature to present a neat interior and exterior edge to the border between the door and the glass-run seal 14.

Figure 5, 6 and 7 show the notch 26 in greater detail. The key feature of the notch is shown in Figures 6 and 7. Figure 6 shows a cross-section through the seal at a position above the notch 26. Accordingly the judder-lip 20 has full extension into the sealing channel 19. In contrast, Figure 7 clearly shows the discontinuity, or notch, 26 at that location by way of the absence of the judder-lip 20 in that section of the seal 14.

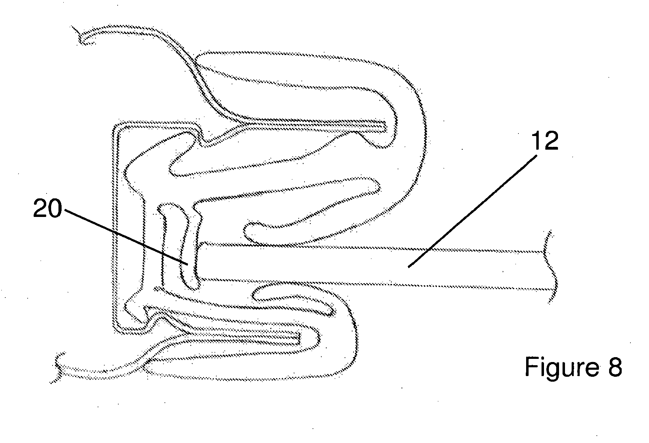

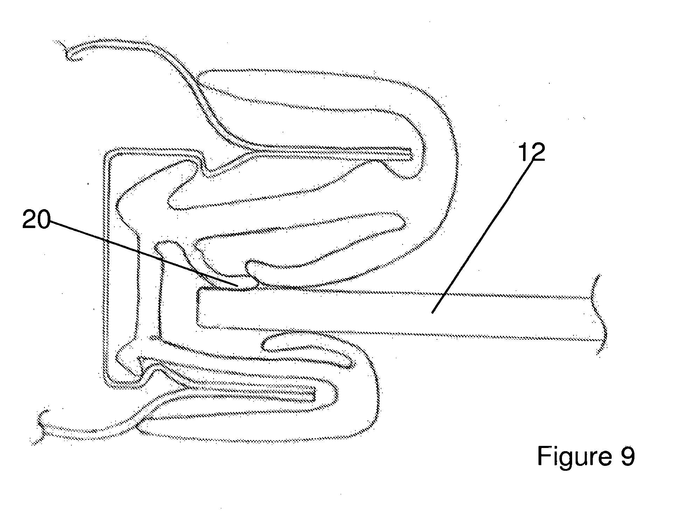

The purpose of the notch will now be described in further detail with reference to Figures 8 and 9. In Figure 8, the judder-lip 20 is shown in its correct, aligned position. However, it has been found that during assembly of the seal 14 to the vehicle door or during operation of the drop-glass by the user, the judder-lip 20 can become misaligned with respect to the drop-glass 12 (as shown in Figure 9) such that the uncoated under side of the judder-lip comes into contact with a planar surface 24 of the drop-glass 12. This results in increased friction between the judder-lip 20 and the drop-glass 12 which in turn leads to increased window regulator loads required to move the drop-glass 12 in the sealing channel 19. In the worst cases this can lead to slowing or jamming of the glass in the glass-run seal 14 or even a failure of the window regulator.

In use, the upper section 32 of the judder-lip 20 may become misaligned, that is to say it comes in contact with a planar surface of the drop-glass as shown in Figure 9 when the drop-glass is in its closed position. Upon subsequent opening of the drop-glass 12, the upper edge 23 of the glass 12 moves down the glass-run seal 14 towards the notch 26. As soon as the upper edge passes the notch 26, the judder-lip 20 springs from its misaligned position (Figure 9) to its aligned position (Figure 8) under the resilient bias offered by the resilient material from which the seal is manufactured. When the drop-glass 12 is subsequently closed, the judder-lip 20 is in the correctly aligned position and remains so when engaged by the advancing upper edge 23 of the drop-glass.

In this way, the discontinuity in the form of the notch 26 allows the upper and lower sections 32, 34 of the judder-lip 20 to move independently of one another and to independently assume their aligned position. With the notch 26 located in accordance with the current invention, when the glass 12 is in its closed or its fully open position, the section 32, 34 of the judder-lip 20 not in contact with the glass 12 can assume its aligned position. In this way, if the judder-lip 20 becomes misaligned, it can simply be re-aligned by moving the glass 12 between its two extreme positions and back to its start position, thereby running the entire edge of the glass 12 in contact with the glass-run seal 14 past the notch 26. As the misaligned section of the judder-lip 20 becomes free of the restraint of the glass 12 maintaining it in its misaligned position, the resilient nature of the judder-lip 20 causes it to assume its aligned position and the problems of continual misalignment are thereby overcome.

In the example shown in the Figures the notch 26 is formed in the judder-lip 20 by cutting a section of the judder-lip 20 using a blade, notching tool or other suitable means. It will be appreciated by one skilled in the art that the notch 26 need not necessarily be created by separating or bifurcation of the judder-lip 20 itself. Indeed, the function of the notch 26 may be achieved by joining two extruded sections comprising a judder-lip, with a moulded joining section without the judder-lip feature. Alternatively, the forming of the judder-lip may be temporarily interrupted during the extrusion process. It will also be appreciated that the size, shape and position of the notch 26 in the judder-lip 20 may vary depending on the particular sealing application.

It will be appreciated to one skilled in the art that the present invention may be used in other vehicular or non-vehicular applications. The use of a judder-lip 20 provided with a notch 26 is particularly advantageous where an aperture must be selectively exposed or covered using a sliding piece of glass, a panel or any other suitable means guided by a channel.

The vehicle door shown in Figures 1 and 2 is a typical rear side door of a vehicle. It will be appreciated that the glass-run seal of the present invention may be applied equally to a movable sliding window in a front side door, fixed side panel, a rear door, rear screen or tailgate or any other location where a movable sliding window is required.

The most common examples of slidably openable windows used in motor vehicles are used in vehicle doors where the sliding window-glass moves in a substantially vertical direction. However, there are known examples where the window-glass moves in a substantially horizontal direction, where restrictions such as packaging space, ergonomics and styling all dictate the method of operation of the opening window.

## Claims

1. A glass-run seal (14) for sealing an openable vehicle window, the window comprising a window-glass (12) slidably movable between a closed position and an open position, the window-glass (12) defining a leading edge, a trailing edge (23) and side edges (15) extending therebetween;
the glass-run seal (14) including a judder-lip (20) arranged to seal against a side edge (15) of the window-glass (12), the judder-lip (20) being movable between an aligned position towards which the judder-lip (20) is resiliently biased and in which, in use, the judder-lip (20) contacts at least part of the side edge (15) of the window-glass (12); and a misaligned position in which, in use, the judder-lip (20) contacts with a planar surface (24) of the window-glass (12);
**characterised in that** the judder-lip (20) has at least a first discontinuity (26) therein to allow movement of the judder-lip (20) from the misaligned position to the aligned position upon the opening or closing of the window, where with the window-glass (12) in its closed position, the trailing edge (23) is above the discontinuity; and with the window-glass (12) in its open position the leading edge (23) is below the discontinuity.

2. A glass-run seal (14) according to claim 1 wherein the or each discontinuity (26) allows a section (32) of the judder-lip (20) arranged on one side of the discontinuity (26) to flex substantially independently of a section of the judder-lip (34) arranged on the other side of the discontinuity (26).

3. A glass-run seal (14) according to claim 1 or claim 2 wherein the glass-run seal (14) further comprises a first wall seal (16) configured to seal, in use, against a first planar surface (22) of the window-glass (12) and/or a second wall seal (18) configured to seal, in use, against a second opposing planar surface (24) of the window-glass (12).

4. A glass-run seal (14) according to any preceding claim wherein at least one discontinuity (26) is positioned below a waistrail of a vehicle.

5. A glass-run seal (14) according to any preceding claim wherein said first discontinuity (26) comprises a V-shaped cut in the judder-lip (20).

6. A glass-run seal (14) according to any preceding claim wherein the seal comprises an extrusion.

7. A glass-run seal (14) according to any preceding claim further comprising a second discontinuity in the judder-lip (20) located above the first discontinuity (26).

8. A door (10) for a vehicle, the door comprising:
a window frame (11) defining an aperture (13) for receiving the glass-run seal (14) and the window-glass (12) of any one of claims 1 to 7,
wherein the aperture (13) is partially closed when the window-glass (12) is in its open position.

9. A door (10) according to claim 8, wherein when the window-glass (12) moves between its open position and its closed position, the entirety of the window-glass side edge (15) within the glass-run seal (14) passes the discontinuity (26).

10. A door (10) according to claim 8 or claim 9, when dependent on claim 7, wherein the trailing edge (23) of the window-glass (12) is arranged above the first discontinuity (26) with the window-glass (12) in its closed position, and the leading edge (21) of the window-glass (12) is arranged below the second discontinuity with the window-glass (12) in its open position.

11. A door (10) according to claim 9 wherein:
when the window-glass (12) is in its open position, an upper section (32) of the judder-lip (20) is not in contact with the window-glass (12), enabling the upper section (32) of the judder-lip (20) to assume its aligned position towards which it is resiliently biased; and
when the window-glass (12) is in its closed position, a lower section (34) of the judder-lip (20) is not in contact with said window-glass (12), enabling the lower section (34) to assume its aligned position towards which it is resiliently biased.

12. A door (10) according to any one of claims 8 to 11, where the window-glass (12) is slidably movable between the closed position and the open position by the manual turning of a handle.

13. A door (10) according to any one of claims 8 to 11, where the window-glass (12) is slidably movable between the closed position and the open position by the operation of a switch which controls a window regulator.

14. A vehicle comprising a glass-run seal (14) according to any one of claims 1 to 7 and/or a door (10) according to any one of claims 8 to 13.

15. A method of manufacturing a glass-run seal (14) according to any one of claims 1 to 7, the method comprising:
a) extruding an elongate glass-run seal (14) comprising a judder-lip (20) for engaging an outer edge of the window-glass (12);
b) inserting sections of said extrusion into a mould;
c) moulding corners to join said sections to form a continuous seal; and
d) forming at least one discontinuity (26) in said judder-lip (20).

## Patentansprüche

1. Scheibenführungsdichtung (14) zum Abdichten eines zu öffnenden Fahrzeugfensters, wobei das Fenster ein Fensterglas (12) aufweist, das verschiebbar zwischen einer geschlossenen und einer geöffneten Position bewegbar ist, wobei das Fensterglas (12) eine Führungskante, eine Hinterkante (23) und Seitenkanten (15) zwischen diesen aufweist;
wobei die Scheibenführungsdichtung (14) eine Rubbellippe (20) aufweist, die zum Abdichten gegen eine Seitenkante (15) des Fensterglases (12) angeordnet ist, wobei die Rubbellippe (20) bewegbar ist zwischen einer ausgerichteten Position, gegen die die Rubbellippe (20) elastisch vorgespannt ist, und in der die Rubbellippe (20) beim Gebrauch wenigstens einen Teil der Seitenkante (15) des Fenstergalses (12) berührt; und einer nicht ausgerichteten Position, in der die Rubbellippe (20) beim Gebrauch eine ebene Fläche (24) des Fensterglases (12) berührt;
**dadurch gekennzeichnet, dass** die Rubbellippe (20) wenigstens eine erste Diskontinuität (26) darin aufweist, damit die Rubbellippe (20) beim Öffnen oder Schließen des Fensters aus der nicht ausgerichteten Position in die ausgerichtete Position bewegt werden kann, wobei die Hinterkante (23) sich über der Diskontinuität befindet, wenn sich das Fensterglas (12) in seiner geschlossenen Position befindet; und die Führungskante (23) sich unter der Diskontinuität befindet, wenn sich das Fensterglas (12) in seiner geöffneten Position befindet.

2. Scheibenführungsdichtung (14) nach Anspruch 1, wobei die oder jede Diskontinuität (26) es ermöglicht, dass ein Abschnitt (32) der Rubbellippe (20), der auf einer Seite der Diskontinuität (26) angeordnet ist, erheblich nachgibt, unabhängig von einem Abschnitt der Rubbellippe (34), der auf der anderen Seite der Diskontinuität (26) angeordnet ist.

3. Scheibenführungsdichtung (14) nach Anspruch 1 oder 2, wobei die Scheibenführungsdichtung (14) ferner eine erste Wanddichtung (16) aufweist, die konfiguriert ist, um bei Gebrauch gegen eine erste ebene Oberfläche (22) des Fensterglases (12) abzudichten, und/oder eine zweite Wanddichtung (18) aufweist, die konfiguriert ist, um bei Gebrauch gegen eine zweite, gegenüberliegende ebene Oberfläche (24) des Fensterglases (12) abzudichten.

4. Scheibenführungsdichtung (14) nach einem der vorhergehenden Ansprüche, wobei wenigstens eine Diskontinuität (26) unterhalb eines Längsträgers an der Gürtellinie eines Fahrzeugs angeordnet ist.

5. Scheibenführungsdichtung (14) nach einem der vorhergehenden Ansprüche, wobei die erste Diskontinuität (26) einen V-förmigen Einschnitt in der Rubbellippe (20) aufweist.

6. Scheibenführungsdichtung (14) nach einem der vorhergehenden Ansprüche, wobei Die Dichtung eine Extrusion umfasst.

7. Scheibenführungsdichtung (14) nach einem der vorhergehenden Ansprüche, ferner umfassend eine zweite Diskontinuität in der Rubbellippe (20), die über der ersten Diskontinuität (26) angeordnet ist.

8. Tür (10) für ein Fahrzeug, wobei die Tür Folgenden umfasst:
einen Fensterrahmen (11), der eine Öffnung (13) zum Aufnehmen der Scheibenführungsdichtung (14) und des Fensterglases (12) nach einem der Ansprüche 1 bis 7 definiert,
wobei die Öffnung (13) teilweise geschlossen ist, wenn sich das Fensterglas (12) in seiner geöffneten Position befindet.

9. Tür (10) nach Anspruch 8, wobei die gesamte Seitenkante (15) des Fensterglases innerhalb der Scheibenführungsdichtung (14) die Diskontinuität (26) passiert, wenn sich das Fensterglas (12) zwischen seiner geöffneten Position und seiner geschlossenen Position bewegt.

10. Tür (10) nach Anspruch 8 oder Anspruch 9, sofern abhängig von Anspruch 7, wobei die Hinterkante (23) des Fensterglases (12) oberhalb der ersten Diskontinuität (26) angeordnet, wenn sich das Fensterglas (12) in seiner geschlossenen Position befindet ist und die Führungskante (21) des Fensterglases (12) unterhalb der zweiten Diskontinuität angeordnet ist, wenn sich das Fensterglas (12) in seiner geöffneten Position befindet.

11. Tür (10) nach Anspruch 9, wobei:
wenn sich das Fensterglas (12) in seiner geöffneten Position befindet, ein oberer Abschnitt (32) der Rubbellippe (20) das Fensterglas (12) nicht berührt, wodurch der obere Abschnitt (32) der Rubbellippe (20) die ausgerichtete Position einnehmen kann, gegen die er elastisch vorgespannt ist; und
wenn sich das Fensterglas (12) in seiner geschlossenen Position befindet, ein unterer Abschnitt (34) der Rubbellippe (20) das Fensterglas (12) nicht berührt, wodurch der untere Abschnitt (34) die ausgerichtete Position einnehmen kann, gegen die er elastisch vorgespannt ist.

12. Tür (10) nach einem der Ansprüche 8 bis 11, wobei das Fensterglas (12) zwischen der geschlossenen Position und der geöffneten Position durch manuelles Drehen eines Griffs gleitend verschoben werden kann.

13. Tür (10) nach einem der Ansprüche 8 bis 11, wobei das Fensterglas (12) zwischen der geschlossenen Position und der geöffneten Position durch Betätigen eines Schalters, der einen Fensterregler steuert, gleitend verschoben werden kann.

14. Fahrzeug, umfassend eine Scheibenführungsdichtung (14) nach einem der Ansprüche 1 bis 7 und/oder eine Tür (10) nach einem der Ansprüche 8 bis 13.

15. Verfahren zum Herstellen einer Scheibenführungsdichtung (14) nach einem der Ansprüche 1 bis 7, wobei das Verfahren Folgendes umfasst:
a) Extrudieren einer langgestreckten Scheibenführungsdichtung (14), die eine Rubbellippe (20) zum Eingreifen in eine Außenkante des Fensterglases (12) aufweist;
b) Einbringen von Abschnitten der Extrusion in eine Form;
c) Ausformen von Ecken, um die Abschnitte zum Ausbilden einer zusammenhängenden Dichtung miteinander zu verbinden; und
d) Ausbilden wenigstens einer Diskontinuität (26) in der Rubbellippe (20).

## Revendications

1. Joint de coulisse de vitre (14) pour étanchéifier une fenêtre de véhicule ouvrante, la fenêtre comprenant une vitre de fenêtre (12) mobile de façon coulissante entre une position fermée et une position ouverte, la vitre de fenêtre (12) définissant un bord avant, un bord arrière (23) et des bords latéraux (15) s'étendant entre ces derniers ;
le joint de coulisse de vitre (14) incluant une lèvre de saccade (20) agencée pour étanchéifier sur un bord latéral (15) de la vitre de fenêtre (12), la lèvre de saccade (20) étant mobile entre une position alignée vers laquelle la lèvre de saccade (20) est sollicitée de façon élastique et dans laquelle, en utilisation, la lèvre de saccade (20) est en contact avec au moins une partie du bord latéral (15) de la vitre de fenêtre (12) ; et une position désalignée dans laquelle, en utilisation, la lèvre de saccade (20) est en contact avec une surface plane (24) de la vitre de fenêtre (12) ;
**caractérisé en ce que** la lèvre de saccade (20) a au moins une première discontinuité (26) à l'intérieur pour permettre un mouvement de la lèvre de saccade (20) de la position désalignée vers la position alignée lors de l'ouverture ou de la fermeture de la fenêtre, où avec la vitre de fenêtre (12) dans sa position fermée, le bord arrière (23) est au-dessus de la discontinuité ; et avec la vitre de fenêtre (12) dans sa position ouverte, le bord avant (23) est sous la discontinuité.

2. Joint de coulisse de vitre (14) selon la revendication 1, dans lequel la ou chaque discontinuité (26) permet à une section (32) de la lèvre de saccade (20) agencée sur un côté de la discontinuité (26) de se fléchir sensiblement indépendamment d'une section de la lèvre de saccade (34) agencée sur l'autre côté de la discontinuité (26).

3. Joint de coulisse de vitre (14) selon la revendication 1 ou la revendication 2, dans lequel le joint de coulisse de vitre (14) comprend en outre un premier joint de paroi (16) configuré pour étanchéifier, en utilisation, sur une première surface plane (22) de la vitre de fenêtre (12) et/ou un second joint de paroi (18) configuré pour étanchéifier, en utilisation, sur une seconde surface plane opposée (24) de la vitre de fenêtre (12).

4. Joint de coulisse de vitre (14) selon l'une quelconque des revendications précédentes, dans lequel au moins une discontinuité (26) est positionnée sous un renfort de ceinture d'un véhicule.

5. Joint de coulisse de vitre (14) selon l'une quelconque des revendications précédentes, dans lequel ladite première discontinuité (26) comprend une découpe en forme de V dans la lèvre de saccade (20).

6. Joint de coulisse de vitre (14) selon l'une quelconque des revendications précédentes, dans lequel le joint comprend une extrusion.

7. Joint de coulisse de vitre (14) selon l'une quelconque des revendications précédentes, comprenant en outre une seconde discontinuité dans la lèvre de saccade (20) située au-dessus de la première discontinuité (26).

8. Portière (10) de véhicule, la portière comprenant :
un cadre de fenêtre (11) définissant une ouverture (13) pour recevoir le joint de coulisse de vitre (14) et la vitre de fenêtre (12) de l'une quelconque des revendications 1 à 7,
dans laquelle l'ouverture (13) est partiellement fermée lorsque la vitre de fenêtre (12) est dans sa position ouverte.

9. Portière (10) selon la revendication 8, dans laquelle lorsque la vitre de fenêtre (12) se déplace entre sa position ouverte et sa position fermée, la totalité du bord latéral de vitre de fenêtre (15) dans le joint de coulisse de vitre (14) passe la discontinuité (26).

10. Portière (10) selon la revendication 8 ou la revendication 9, lorsqu'elle dépend de la revendication 7, dans laquelle le bord arrière (23) de la vitre de fenêtre (12) est agencé au-dessus de la première discontinuité (26) avec la vitre de fenêtre (12) dans sa position fermée, et le bord avant (21) de la vitre de fenêtre (12) est agencé sous la seconde discontinuité avec la vitre de fenêtre (12) dans sa position ouverte.

11. Portière (10) selon la revendication 9, dans laquelle :
lorsque la vitre de fenêtre (12) est dans sa position ouverte, une section supérieure (32) de la lèvre de saccade (20) n'est pas en contact avec la vitre de fenêtre (12), permettant à la section supérieure (32) de la lèvre de saccade (20) de prendre sa position alignée vers laquelle elle est sollicitée de façon élastique ; et
lorsque la vitre de fenêtre (12) est dans sa position fermée, une section inférieure (34) de la lèvre de saccade (20) n'est pas en contact avec ladite vitre de fenêtre (12), permettant à la section inférieure (34) de prendre sa position alignée vers laquelle elle est sollicitée de façon élastique.

12. Portière (10) selon l'une quelconque des revendications 8 à 11, où la vitre de fenêtre (12) est mobile de façon coulissante entre la position fermée et la position ouverte en tournant manuellement une poignée.

13. Portière (10) selon l'une quelconque des revendications 8 à 11, où la vitre de fenêtre (12) est mobile de façon coulissante entre la position fermée et la position ouverte en actionnant un commutateur qui commande un régulateur de fenêtre.

14. Véhicule comprenant un joint de coulisse de vitre (14) selon l'une quelconque des revendications 1 à 7 et/ou une portière (10) selon l'une quelconque des revendications 8 à 13.

15. Procédé de fabrication d'un joint de coulisse de vitre (14) selon l'une quelconque des revendications 1 à 7, le procédé comprenant :
a) l'extrusion d'un joint de coulisse de vitre allongé (14) comprenant une lèvre de saccade (20) destinée à mettre en prise un bord externe de la vitre de fenêtre (12) ;
b) l'insertion de sections de ladite extrusion dans un moule,
c) le moulage de coins pour joindre lesdites sections pour former un joint continu ; et
d) la formation d'au moins une discontinuité (26) dans ladite lèvre de saccade (20).
